# EUROPÄISCHE PATENTSCHRIFT

(11) **EP 0 526 454 B1**
(45) Veröffentlichungstag und Bekanntmachung des Hinweises auf die Patenterteilung: **21.09.1994**
(21) Anmeldenummer: 91903346.4
(22) Anmeldetag: 05.02.1991
(51) Int. Cl.: B60T 13/52, B60T 8/44, B60T 8/40

(54) **VERFAHREN ZUR EINSTELLUNG EINES FUNKTIONSMASSES**
PROCESS FOR ADJUSTING A FUNCTIONAL DIMENSION
PROCEDE D'AJUSTEMENT D'UNE MESURE FONCTIONNELLE

(30) Priorität: 06.04.1990 DE 4011165
(43) Veröffentlichungstag der Anmeldung: 10.02.1993
(73) Patentinhaber: ITT Automotive Europe GmbH, 60488 Frankfurt (DE)
(72) Erfinder: REINARTZ, Hans-Dieter, D-6000 Frankfurt/Main 50 (DE); STEFFES, Helmut, D-6234 Hattersheim 3 (DE); RISCH, Stefan, D-6200 Wiesbaden (DE)
(86) Internationale Anmeldenummer: EP9100214
(87) Internationale Veröffentlichungsnummer: WO9115387

(56) Entgegenhaltungen:
- EP-A- 352 392
- WO-A-89/10862
- DE-A- 2 851 264
- DE-A- 3 731 603
- DE-A- 3 918 012
- DE-C- 3 226 579
- US-A- 4 365 538

## Beschreibung

Die Erfindung betrifft ein Verfahren zur Einstellung eines Funktionsmaßes einer Baugruppe für blockiergeschützte Kraftfahrzeugbremsanlagen, bestehend aus einem Unterdruckbremskraftverstärker und einem elektrischen Wegsensor zur Überwachung der Lage einer die Verstärkungskraft des Unterdruckbremskraftverstärkers aufbringenden beweglichen Wand, insbesondere zur Einstellung des gewünschten axialen Abstandes zwischen einem Betätigungsorgan des Wegsensors und der beweglichen Wand.

Um das ordnungsgemäße Funktionieren von blockiergeschützten Bremsanlagen, die als "offene" Systeme arbeiten, bei denen eine hydraulische Pumpe vorgesehen ist, die im Regelmodus das Druckmittel aus einem drucklosen Vorratsbehälter ansaugt und bei geschlossenen Radventilen in den dem Unterdruckbremskraftverstärker nachgeschalteten Hauptbremszylinder fördert, um dessen Kolben und somit das den Unterdruckbremskraftverstärker betätigende Pedal zu positionieren, zu gewährleisten, ist es beispielsweise aus der DE-OS 37 31 603 bekannt, die Position der beweglichen Wand zu sensieren. Zu diesem Zweck ist ein Wegsensor, z.B. ein weggesteuerter elektrischer Schalter vorgesehen, der ein von der Stellung der beweglichen Wand abhängiges elektrisches Signal an eine elektronische Regelschaltung abgibt, die die Drehzahl der Pumpe regelt.

Der Unterdruckbremskraftverstärker, insbesondere dessen Gehäuse, ist mit großen Herstellungstoleranzen behaftet, die sich auf die Funktion des Wegsensors negativ auswirken und in einem Extremfall sogar zum Totalausfall der Bremsanlage führen können.

Aus der internationalen Patentanmeldung WO 89/10862 ist ein Unterdruckbremskraftverstärker bekannt, der mit einem durch die bewegliche Wand des Bremskraftverstärkers betätigbaren elektrischen Wegsensor ausgestattet ist. Der Wegsensor ist dabei in einer im Verstärkergehäuse ausgebildeten Öffnung mittels eines Dichtringes befestigt. Bei dem vorbekannten Unterdruckbremskraftverstärker sind jedoch keine Mittel vorgesehen, die Veränderungen der axialen Einbaulage des Wegsensors verhindern, die Änderungen dessen eingestellten Schaltpunktes zur Folge hätten. Durch die Änderungen des vorher festgelegten Schaltpunktes des Wegsensors würde insbesondere die Funktion der vorhin erwähnten hydraulischen Pumpe beeinträchtigt werden.

Es ist daher Aufgabe der Erfindung, ein Verfahren zur Einstellung der genauen Lage des elektrischen Wegsensors gegenüber der beweglichen Wand eines mit dem Wegsensor ausgerüsteten Unterdruckbremskraftverstärkers sowie einen solchen Unterdruckbremskraftverstärker anzugeben, die ein weitgehendes Eliminieren des Einflusses dessen Herstellungstoleranzen auf die Funktion des Wegsensors ermöglichen.

Diese Aufgabe wird erfindungsgemäß durch die folgenden Verfahrensschritte gelöst:
a) Einführen eines Anschlags mit einer definierten Länge für ein die Ausgangskraft des Unterdruckbremskraftverstärkers übertragendes Kraftabgabeglied ins Verstärkergehäuse des Unterdruckbremskraftverstärkers;
b) Evakuieren des Verstärkergehäuses;
c) Betätigen des Unterdruckbremskraftverstärkers mit einer definierten Eingangskraft, die einer Änderung der Lage der beweglichen Wand entspricht,
d) Ermitteln des Abstandes zwischen einer Referenzfläche am Verstärkergehäuse und der beweglichen Wand;
e) Vergleichen des im Schritt d) ermittelten Wertes mit einem vorgegebenen Funktionslängenmaß des Wegsensors;
f) Auswahl eines Distanzelementes geeigneter Länge in Abhängigkeit von dem im Ergebnis des im Schritt e) durchgeführten Vergleichs;
g) Anbringen des Distanzelementes auf das Betätigungsorgan des Wegsensors.

Eine andere Lösung der gestellten Aufgabe besteht darin, daß die oben erwähnten Schritte a) bis d) wiederholt werden, wonach der Wegsensor gegenüber der beweglichen Wand so positioniert wird, daß der gewünschte axiale Abstand erreicht wird. Durch diese Maßnahmen wird ein Austausch des Wegsensors im Serienfall erheblich vereinfacht. Der Vorteil der letztgenannten Lösung gegenüber der ersten besteht darin, daß hierbei die Einstellung am Bremskraftverstärker durchgeführt wird, dessen Zustand nicht mehr geändert wird. Bei der erstgenannten Lösung erfolgt die Einstellung am Wegsensor, so daß sie bei dessen Austausch erneut vorgenommen werden muß.

Weitere Einzelheiten und vorteilhafte Merkmale der Erfindung gehen aus den Unteransprüchen und der folgenden Beschreibung von drei Ausführungsbeispielen im

Zusammenhang mit der beiliegenden Zeichnung hervor. Dabei zeigt:
- Fig. 1: eine Meßanordnung zur Durchführung des erfindungsgemäßen Verfahrens;
- Fig. 2: eine erfindungsgemäß eingestellte Baugruppe, bestehend aus Unterdruckbremskraftverstärker und Wegsensor;
- Fig. 3: eine erste Ausführung einer den Wegsensor positionierenden Sensoraufnahme, und
- Fig. 4: eine zweite Ausführung der Sensoraufnahme.

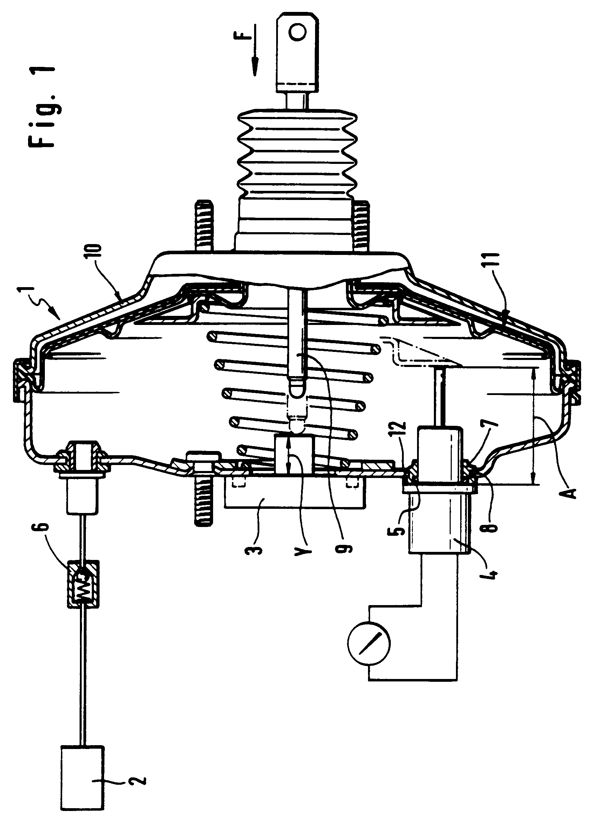

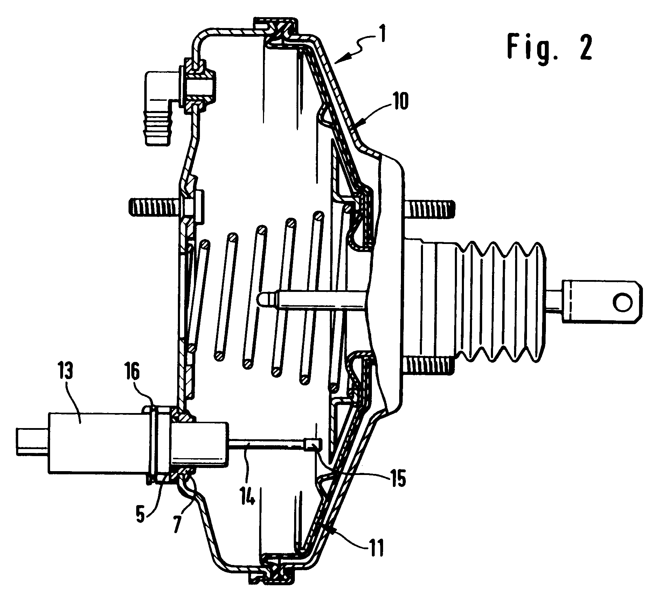

Wie Fig. 1 erkennen läßt, wird bei der Durchführung des erfindungsgemäßen Verfahrens ein Unterdruckbremskraftverstärker 1, der mit einem nicht gezeigten Wegsensor ausgerüstet werden soll, über ein Rückschlagventil 6 an eine Unterdruckquelle 2 angeschlossen, während sein Verstärkergehäuse 10 luftdicht verschlossen wird. Zu diesem Zweck wird ein schematisch dargestellter Anschlag 3 definierter Länge Y verwendet, der während des Meßvorgangs ins Innere des Verstärkergehäuses 10 eingeführt wird und der Abstützung eines die Ausgangskraft des Unterdruckbremskraftverstärkers 1 übertragenden Kraftabgabegliedes 9 dient. Gleichzeitig wird in eine im Verstärkergehäuse 10 vorgesehene Öffnung 8 eine Sensoraufnahme 7 eingesetzt, die nach Beendigung des Meßvorganges den oben erwähnten Wegsensor aufnimmt. Bei der Messung wird durch die Sensoraufnahme 7 ein Meßgerät 4 eingeführt und mittels einer Dichtung 5 abgedichtet, dessen Aufgabe darin besteht, zu einem festgelegten Zeitpunkt den Abstand A zwischen einer am Verstärkergehäuse 10 definierter Referenzfläche, ggf. der Stirnfläche 12 der Sensoraufnahme 7, und einer die Verstärkungskraft des Unterdruckbremskraftverstärkers 1 aufbringenden beweglichen Wand 11 zu ermitteln. Bei der anschließenden Betätigung des Unterdruckbremskraftverstärkers 1 mit einer vorher festgelegten Eingangkraft F wird die bewegliche Wand 11 mit dem Kraftabgabeglied 9 in Richtung auf den Anschlag 3 zu so lange verschoben, bis das Kraftabgabeglied 9 am Anschlag 3 zur Anlage kommt und die bewegliche Wand 11 dadurch in der gestrichelt gezeichneten Stellung positioniert wird. Der dieser Stellung entsprechende axiale Abstand A zwischen der Stirnfläche 12 der Sensoraufnahme 7 und der beweglichen Wand 11 wird mit einem Funktionslängenmaß des einzusetzenden Wegsensors 13 (Fig. 2) verglichen, dessen Betätigungsorgan 14 in Betrieb mit der beweglichen Wand 11 zusammenwirkt. Dieses Funktionsmaß entspricht vorzugsweise der Länge des Betätigungsorgans 14 bei Erreichen eines definierten Schaltpunktes des Wegsensors 13. Anschließend wird in Abhängigkeit vom Ergebnis dieses Vergleichs die richtige Länge eines Distanzelementes, beispielsweise einer Distanzkappe 15 ermittelt. Um die Zuordnung der Distanzkappen 15 unterschiedlicher Längen den Vergleichsergebnissen zu erleichtern ist vorgesehen, daß jedem Längenmaß der Distanzkappen 15 ein bestimmter Farbton, beispielsweise rot, grün, blau oder weiß entspricht. Nach der Auswahl der richtigen Distanzkappe 15 wird diese auf das Ende des Betätigungsorgans 14 aufgesteckt und der Wegsensor 13 in die Sensoraufnahme 7 eingeführt und gegen Verschieben mittels eines Halteringes 16 gesichert. Der Einstellvorgang ist damit beendet.

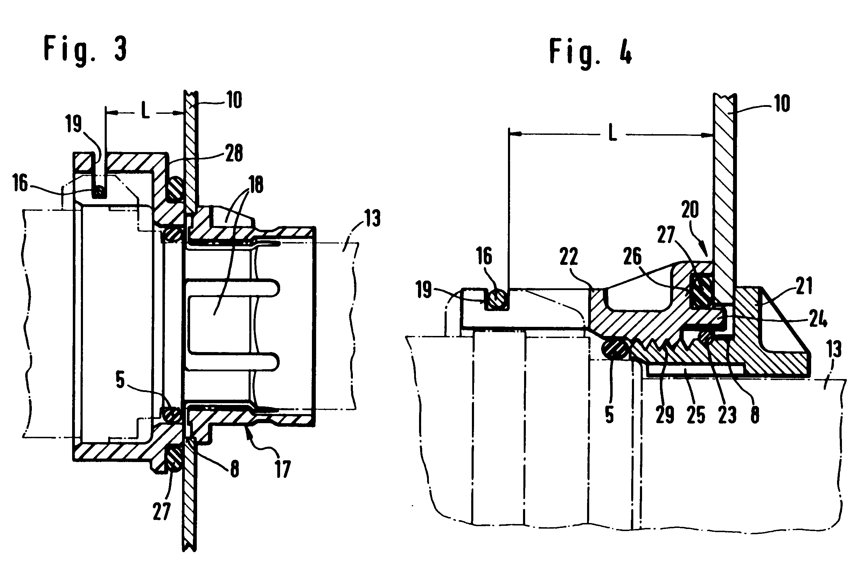

Fig. 3 zeigt eine erste Ausführung einer Sensoraufnahme 17, die einer Positionierung des Wegsensors 13 gegenüber der nicht gezeigten, vorhin erwähnten beweglichen Wand dient, so daß die Einstellung direkt am Unterdruckbremskraftverstärker 1 vorgenommen wird. Zu diesem Zweck werden beispielweise vier Gruppen von Sensoraufnahmen 17 unterschiedlicher Maße zur Verfügung gestellt, die in Abhängigkeit von der Größe des Abstandes zwischen der vorhin erwähnten Referenzfläche und der beweglichen Wand ausgewählt werden. In diesem Fall ist die Referenzfläche durch die Oberfläche des den Wegsensor 13 aufnehmenden Verstärkergehäuses 10 gebildet. Wie der Fig. 3 zu entnehmen ist, weist die Sensoraufnahme 17 in ihrem ins Innere des Verstärkergehäuses 10 hineinragenden Bereich mehrere Rastvorsprünge 18 auf, die im montierten Zustand der Sensoraufnahme 17 im Verstärkergehäuse 10 den Rand der dafür vorgesehenen Öffnung 8 hintergreifen. Für eine wirksame Abdichtung der Sensoraufnahme 17 gegenüber dem Verstärkergehäuse 10 sorgt eine elastische Dichtung, vorzugsweise ein O-Ring 27, der zwischen der Oberfläche des Verstärkergehäuses 10 und einer an der Sensoraufnahme 17 ausgebildeten Ringfläche 28 angeordnet ist. Um den Wegsensor 13 nach dessen Montage in der Sensoraufnahme 17 zu fixieren, ist sie in ihrem außerhalb des Verstärkergehäuses 10 liegenden Bereich mit einer radialen Umfangsnut 19 versehen, die den den Wegsensor 13 haltenden Haltering 16 aufnimmt, wobei das die Position des montierten Wegsensors 13 bestimmende Funktionsmaß der Sensoraufnahme 17, das als Kriterium für die Auswahl der richtigen Sensoraufnahme 7 dient, als der Abstand L zwischen der Oberfläche des Verstärkergehäuses 10 und der dem Verstärkergehäuse 10 näher liegenden Flanke der Umfangsnut 19 definiert ist.

Denkbar ist auch eine andere Art der Befestigung der Sensoraufnahme 17 im Verstärkergehäuse 10, beispielsweise mittels eines Bajonettverschlusses. Zu diesem Zweck weist die Sensoraufnahme z.B. mehrere radiale Vorsprünge, die in entsprechende Aussparungen im Verstärkergehäuse 10 eingeführt werden, wonach die Sensoraufnahme verdreht wird, so daß die Vorsprünge wieder den Rand der Öffnung 8 hintergreifen, wobei die die Sensoraufnahme abdichtende Dichtung die erforderliche Vorspann- und Haltekraft für die Bajonettverbindung erbringt.

Die in Fig. 4 gezeigte Sensoraufnahme 20 ist so ausgebildet, daß sie Änderungen ihrer Baulänge erlaubt. Sie besteht aus einem von innen durch die Verstärkergehäuseöffnung 8 hindurchgeführten ersten Teil 21 sowie einem außerhalb des Verstärkergehäuses 10 angeordneten zweiten Teil 22, die mittels einer Gewindeverbindung 29 miteinander verbunden sind. Bei der Montage der gezeigten Sensoraufnahme 20 wird das erste Teil 21 durch die Öffnung 8 hindurchgesteckt und mittels eines Springrings 23 gegen Herausfallen gesichert. Nach dem Ermitteln des vorhin erwähnten Abstandes "A" zwischen der beweglichen Wand und der Referenzfläche am Verstärkergehäuse 10 bzw. der Festlegung des die Position des montierten Wegsensors 13 bestimmenden Funktionsmaßes "L" wird das zweite Teil 22 auf das erste Teil 21 aufgeschraubt, wobei in der Endphase, in der eine als Verdrehsicherung an dem dem ersten Teil 21 zugewandten Ende des zweiten Teiles 22 ausgebildete Nase 24 von einer im Verstärkergehäuse 10 vorgesehenen Aussparung aufgenommen wird, das erste Teil 21 über Mitnehmernuten 25 angetrieben wird. Die das zweite Teil 22 gegenüber dem Verstärkergehäuse 10 abdichtende Dichtung 27 ist bei dieser Ausführungsform in einer an der dem Verstärkergehäuse 10 zugewandten Stirnseite des zweiten Teils 22 ausgebildeten Ringnut 26 angeordnet, deren Flanken schräg ausgebildet sein können, so daß die Dichtung 27 bei der Montage aus der Ringnut 26 nicht herausfallen kann. Ist das vorher festgelegte Funktionsmaß "L" erreicht, so ist der Einstellvorgang beendet, so daß der Wegsensor 13 eingeführt und mittels des Halteringes 16 gesichert werden kann. Die dem Inneren des Verstärkergehäuses 10 abgewandte Stirnfläche des ersten Teiles 21 dient dabei als Abstützfläche für die den Wegsensor 13 gegenüber der Sensoraufnahme 20 abdichtende Dichtung 5.

### Bezugszeichenliste

- 1: Unterdruckbremskraftverstärker
- 2: Unterdruckquelle
- 3: Anschlag
- 4: Meßgerät
- 5: Dichtung
- 6: Rückschlagventil
- 7: Sensoraufnahme
- 8: Öffnung
- 9: Kraftabgabeglied
- 10: Verstärkergehäuse
- 11: bewegliche Wand
- 12: Stirnfläche
- 13: Wegsensor
- 14: Betätigungsorgan
- 15: Distanzkappe
- 16: Haltering
- 17: Sensoraufnahme
- 18: Rastvorsprung
- 19: Umfangsnut
- 20: Sensoraufnahme
- 21: erstes Teil
- 22: zweites Teil
- 23: Sprengring
- 24: Nase
- 25: Mitnehmernut
- 26: Ringnut
- 27: O-Ring
- 28: Ringfläche
- 29: Gewindeverbindung
- A: Abstand
- L: Funktionsmaß

## Patentansprüche

1. Verfahren zur Einstellung eines Funktionsmaßes einer Baugruppe für blockiergeschützte Kraftfahrzeugbremsanlagen, bestehend aus einem Unterdruckbremskraftverstärker (1) und einem elektrischen Wegsensor (13) zur Überwachung der Lage einer die Verstärkungskraft des Unterdruckbremskraftverstärkers aufbringenden beweglichen Wand (11), insbesondere zur Einstellung des axialen Abstandes zwischen einem Betätigungsorgan des Wegsensors und der beweglichen Wand, **gekennzeichnet** durch die folgenden Verfahrensschritte:
a) Einführen eines Anschlags (3) mit einer definierten Länge (Y) für ein die Ausgangskraft des Unterdruckbremskraftverstärkers (1) übertragendes Kraftabgabeglied (9) ins Verstärkergehäuse (10) des Unterdruckbremskraftverstärkers (1);
b) Evakuieren des Verstärkergehäuses (10);
c) Betätigen des Unterdruckbremskraftverstärkers (1) mit einer definierten Eingangskraft, die einer Änderung der Lage der beweglichen Wand (11) entspricht,
d) Ermitteln des Abstandes (A) zwischen einer Referenzfläche am Verstärkergehäuse (10) und der beweglichen Wand (11);
e) Vergleichen des in Schritt d) ermittelten Wertes (A) mit einem vorgegebenen Funktionslängenmaß des Wegsensors (13);
f) Auswahl eines Distanzelementes (15) geeigneter Länge in Abhängigkeit von dem im Ergebnis des Schritt e) durchgeführten Vergleichs;
g) Anbringen des Distanzelementes (15) auf das Betätigungsorgan (14) des Wegsensors (13).

2. Verfahren zur Einstellung eines Funktionsmaßes einer Baugruppe für blockiergeschützte Kraftfahrzeugbremsanlagen, bestehend aus einem Unterdruckbremskraftverstärker (1) und einem elektrischen Wegsensor (13) zur Überwachung der Lage einer die Verstärkungskraft des Unterdruckbremskraftverstärkers aufbringenden beweglichen Wand (11), insbesondere zur Einstellung des axialen Abstandes zwischen einem Betätigungsorgan des Wegsensors und der beweglichen Wand, **ge-kennzeichnet** durch die folgenden Ver- fahrensschritte:
h) Einführen eines Anschlags (3) mit einer definierten Länge (Y) für ein die Ausgangskraft des Unterdruckbremskraftverstärkers (1) übertragendes Kraftabgabeglied (9) ins Gehäuse (10) des Unterdruckbremskraftverstärkers;
i) Evakuieren des Verstärkergehäuses (10);
j) Betätigen des Unterdruckbremskraftverstärkers (1) mit einer definierten Eingangskraft, die einer Änderung der Lage der beweglichen Wand (11) entspricht,
k) Ermitteln des Abstandes (A) zwischen einer Referenzfläche am Verstärkergehäuse (10) und der beweglichen Wand (11);
l) Positionieren des Wegsensors (13) gegenüber der beweglichen Wand (11) so, daß der axiale Abstand erreicht wird.

3. Verfahren nach Anspruch 1, dadurch **gekennzeichnet**, daß die Distanzelemente als Distanzkappen (15) unterschiedlicher Länge ausgebildet sind, die auf das Ende des Betätigungsorgans (14) aufgesteckt werden.

4. Verfahren nach Anspruch 3, dadurch **gekennzeichnet**, daß die Distanzkappen (15) verschiedene Farbtöne aufweisen.

5. Verfahren nach Anspruch 1, dadurch **gekennzeichnet**, daß der Wegsensor (13) in einer im Verstärkergehäuse (10) vorgesehenen Sensoraufnahme (7) angeordnet ist, wobei die Referenzfläche die dem Verstärkergehäuse (10) abgewandte Stirnfläche (12) der Sensoraufnahme (7) ist.

6. Verfahren nach Anspruch 5, dadurch **gekennzeichnet**, daß der Abstand (A) zwischen der Stirnfläche (12) der Sensoraufnahme (7) und der beweglichen Wand (11) mittels eines unter gleichzeitiger Abdichtung in Verstärkergehäuse (10) eingeführten Meßgerätes (4) ermittelt wird.

7. Verfahren nach Anspruch 1, dadurch **gekennzeichnet**, daß das Funktionslängenmaß des Wegsensors (13) dem Abstand zwischen dem Ende des Betätigungsorgans (14) und der Referenzfläche bei Erreichen einer Schaltstellung des Wegsensors (13) entspricht.

8. Verfahren nach Anspruch 2, dadurch **gekennzeichnet**, daß der Wegsensor (13) mittels der Sensoraufnahme (17,20) positioniert wird, und daß ein die Position des Wegsensors (13) im montierten Zustand bestimmendes Funktionsmaß der Sensoraufnahme (17,20) in Abhängigkeit von der Größe des im Schritt k) ermittelten Abstandes (A) festgelegt wird.

9. Verfahren nach Anspruch 8, dadurch **gekennzeichnet**, daß die Referenzfläche die Oberfläche des Verstärkergehäuses (10) ist.

10. Unterdruckbremskraftverstärker (1) mit einem elektrischen Wegsensor (13) zur Überwachung der Lage einer die Verstärkungskraft des Unterdruckbremskraftverstärkers aufbringenden beweglichen Wand (11), der in einer im Verstärkergehäuse (10) vorgesehenen Öffnung (8) befestigt ist, dadurch **gekennzeichnet**, daß der Wegsensor (13) in einer Sensoraufnahme (17,20) angeordnet ist, die im montierten Zustand einerseits unter Zwischenschaltung eine elastischen Dichtringes (27) am Verstärkergehäuse (10) anliegt und andererseits mit Rastvorsprüngen (18) versehen ist, die den Rand der Öffnung (8) hintergeifen.

11. Unterdruckbremskraftverstärker nach Anspruch 10, dadurch **gekennzeichnet**, daß die Sensoraufnahme (17) eine radiale Umfangsnut (19) aufweist, die einen den Wegsensor (13) haltenden Haltering (16) aufnimmt.

12. Unterdruckbremskraftverstärker nach Anspruch 10 oder 11, dadurch **gekennzeichnet**, daß die Sensoraufnahme (17) eine Verdrehsicherung, beispielsweise einen radialen Vorsprung aufweist, der mit einer im Verstärkergehäuse (10) ausgebildeten Aussparung zusammenwirkt.

13. Unterdruckbremskraftverstärker nach Anspruch 10 oder 11, dadurch **gekennzeichnet**, daß die Sensoraufnahme (17) im Verstärkergehäuse (10) mittels einer Bajonettverbindung befestigt ist.

14. Unterdruckbremskraftverstärker nach Anspruch 10, dadurch **gekennzeichnet**, daß die Sensoraufnahme (17) mit variabler Länge ausgebildet ist.

15. Unterdruckbremskraftverstärker (1) mit einem elektrischen Wegsensor (13) zur Überwachung der Lage einer die Verstärkungskraft des Unterdruckbremskraftverstärkers aufbringenden beweglichen Wand (11), dadurch **gekennzeichnet**, daß der Wegsensor (13) in einer im Verstärkergehäuse (10) vorgesehenen Sensoraufnahme (17,20) angeordnet ist, die zweiteilig ausgebildet ist und ihre beiden Teile (21,22) miteinander verschraubt sind.

16. Unterdruckbremskraftverstärker nach Anspruch 15, dadurch **gekennzeichnet**, daß das erste, mit einem Außengewinde versehene Teil (21) von der Innenseite des Verstärkergehäuses (10) montierbar ist und mittels eines Sprengringes (23) gesichert ist, während das zweite, ein Innengewinde aufweisende Teil (22) mit einer Verdrehsicherung, beispielsweise einer axialen Nase (24) versehen ist, die mit einer Ausnehmung im Verstärkergehäuse (10) zusammenwirkt, wobei das erste Teil (21) mit Mitteln (25) versehen ist, die dessen Verdrehen gegenüber dem zweiten Teil (22) ermöglichen.

17. Unterdruckbremskraftverstärker nach Anspruch 15, dadurch **gekennzeichnet**, daß das zweite Teil (22) an seiner dem Verstärkergehäuse (10) zugewandten Stirnseite eine Ringnut (26) aufweist, die einen das zweite Teil (22) gegenüber dem Verstärkergehäuse (10) abdichtenden elastischen O-Ring (27) aufnimmt.

18. Unterdruckbremskraftverstärker nach Anspruch 15, dadurch **gekennzeichnet**, daß die Ringnut (26) schräge Flanken aufweist.

19. Unterdruckbremskraftverstärker nach einem der Ansprüche 14 bis 18, dadurch **gekennzeichnet**, daß das zweite Teil (22) eine radiale Umfangsnut (19) aufweist, die einen den Wegsensor (13) haltenden Haltering (16) aufnimmt.

20. Unterdruckbremskraftverstärker nach Anspruch 11 oder 19, dadurch **gekennzeichnet**, daß das die Position des Wegsensors (13) im montierten Zustand bestimmende Funktionsmaß der Abstand (L) zwischen der Referenzfläche und der dem Verstärkergehäuse (10) näher liegenden Flanke der Umfangsnut (19) ist.

21. Unterdruckbremskraftverstärker nach einem der Ansprüche 15 bis 20, dadurch **gekennzeichnet**, daß die dem Verstärkergehäuse (10) abgewandte Stirnfläche des ersten Teiles (21) als Anlagefläche für eine den Wegsensor (13) gegenüber der Sensoraufnahme (20) abdichtende Dichtung (5) dient.

22. Unterdruckbremskraftverstärker nach Anspruch 16, dadurch **gekennzeichnet**, daß die Mittel zum Verdrehen des ersten Teils (21) als axiale Mitnehmernuten (25) ausgebildet sind.

23. Unterdruckbremskraftverstärker nach einem der vorhergehenden Ansprüche 10 bis 22, dadurch **gekennzeichnet**, daß die Sensoraufnahme (7,17,20) aus Kunststoff besteht.

## Claims

1. A process for the adjustment of a functional parameter for an assembly for automotive vehicle brake systems with anti-locking device, comprising a vacuum brake power booster (1) and an electric travel sensor (13) for monitoring the position of a movable wall (11) which generates the boosting power of the vacuum brake power booster, in particular, for the adjustment of the axial distance between an actuating element of the travel sensor and the movable wall,
**characterized** by the following process steps:
a) introduction of a stop (3) having a defined length (Y) into the booster housing (10) of the vacuum brake power booster (1) for a power output member (9) transmitting the output power of the vacuum brake power booster (1);
b) evacuation of the booster housing (10);
c) actuation of the vacuum brake power booster (1) with a defined input power which corresponds to a change in the position of the movable wall (11);
d) detection of the distance (A) between a reference surface at the booster housing (10) and the movable wall (11);
e) comparison of the value (A) found out in step d) to a pre-established functional length measure of the travel sensor (13);
f) selection of a spacing element (15) of adequate length depending on the result of the comparison drawn in step e);
g) application of the spacing element (15) on the actuating element (14) of the travel sensor (13).

2. A process for the adjustment of a functional parameter for an assembly for automotive vehicle brake systems with anti-locking device, comprising a vacuum brake power booster (1) and an electric travel sensor (13) for monitoring the position of a movable wall (11) which furnishes the boosting power of the vacuum brake power booster, in particular, for the adjustment of the axial distance between an actuating element of the travel sensor and the movable wall,
**characterized** by the following process steps:
h) introduction of a stop (3) having a defined length (Y) into the housing (10) of the vacuum brake power booster (1) for a power output member (9) transmitting the output power of the vacuum brake power booster (1);
i) evacuation of the booster housing (10);
j) actuation of the vacuum brake power booster (1) with a defined input power which corresponds to a change in the position of the movable wall (11);
k) detection of the distance (A) between a reference surface at the booster housing (10) and the movable wall (11);
l) positioning of the travel sensor (13) in respect of the movable wall (11) such that the axial distance is reached.

3. A process as claimed in claim 1,
**characterized** in that the spacing elements are configurated in the shape of spacing caps (15) of different length which are plugged onto the end of the actuating element (14).

4. A process as claimed in claim 3,
**characterized** in that the spacing caps (15) have different colours.

5. A process as claimed in claim 1,
**characterized** in that the travel sensor (13) is positioned in a sensor accommodating element (7) provided within the booster housing (10), the reference surface being the front face (12) of the sensor accommodating element (7) facing away from the booster housing (10).

6. A process as claimed in claim 5,
**characterized** in that the distance (A) between the front face (12) of the sensor accommodating element (7) and the movable wall (11) is determined by means of a measuring instrument (4) which is introduced into the booster housing (10), simultaneously being sealed off.

7. A process as claimed in claim 1,
**characterized** in that the functional length measure of the travel sensor (13) corresponds to the distance between the end of the actuating element (14) and the reference surface on the travel sensor (13) having reached a switching position.

8. A process as claimed in claim 2,
**characterized** in that the travel sensor (13) is positioned by means of the sensor accommodating assembly (17, 20), and in that a functional parameter of the sensor accommodating assembly (17, 20) determining the position of the travel sensor (13) in the mounted condition is fixed depending on the amount of the distance (A) detected in the step k).

9. A process as claimed in claim 8,
**characterized** in that the reference
surface is the surface of the booster housing (10).

10. A vacuum brake power booster (1) comprising an electric travel sensor (13) for monitoring the position of a movable wall (11) which generates the boosting power of the vacuum brake power booster, which is attached in an opening (8) provided in the booster housing (10),
**characterized** in that the travel sensor (13) is arranged in a sensor accommodating assembly (17, 20) which, in the mounted condition, abuts on the booster housing (10) by the intermediary of an elastic ring seal (27), on the one hand, and, on the other hand, is furnished with locking projections (18) which make catch behind the edge of the opening (8).

11. A vacuum brake power booster as claimed in claim 10,
**characterized** in that the sensor accommodating element (17) is furnished with a radial peripheral groove (19) which accommodates a retaining ring (16) holding the travel sensor (13).

12. A vacuum brake power booster as claimed in claim 10 or claim 11,
**characterized** in that the sensor accommodating element (17) is furnished with an anti-rotating means, for example a radial projection, which interacts with a clearance being formed in the booster housing (10).

13. A vacuum brake power booster as claimed in claim 10 or claim 11,
**characterized** in that the sensor accommodating element (17) is fixed in the booster housing (10) by means of a bayonet locking.

14. A vacuum brake power booster as claimed in claim 10,
**characterized** in that the sensor accommodating element (17) has a variable length.

15. A vacuum brake power booster (1) comprising an electric travel sensor (13) for monitoring the position of a movable wall (11) which generates the boosting power of the vacuum brake power booster,
**characterized** in that the travel sensor (13) is arranged in a sensor accommodating assembly (17, 20) provided in the booster housing and being of two-part design, and its two parts (21, 22) being screwed to each other.

16. A vacuum brake power booster as claimed in claim 15,
**characterized** in that the first part (21) which is furnished with a male thread is mountable from the inner side of the booster housing (10) and is secured by means of a circlip (23), while the second part (22) which is furnished with a female thread is provided with an anti-rotating means, for example with an axial nose (24), which interacts with a recess in the booster housing (10), the first part (21) being furnished with means (25) which render possible its rotating in respect of the second aprt (22).

17. A vacuum brake power booster as claimed in claim 15,
**characterized** in that at its front side facing the booster housing (10) the second part (22) is furnished with an annular groove (26) which accommodates an elastic O-ring (27) sealing off the second part (22) in respect of the booster housing (10).

18. A vacuum brake power booster as claimed in claim 15,
**characterized** in that the annular groove (26) is formed with inclined flanks.

19. A vacuum brake power booster as claimed in anyone of the claims 14 to 18,
**characterized** in that the second part (22) is furnished with a radial peripheral groove (19) which accommodates a retaining ring (16) holding the travel sensor (13).

20. A vacuum brake power booster as claimed in claim 11 or claim 19,
**characterized** in that the functional parameter determining the position of the travel sensor (13) in the mounted condition is the distance (L) between the reference surface and that flank of the peripheral groove (19) which is positioned nearer to the booster housing (10).

21. A vacuum brake power booster as claimed in anyone of the claims 15 to 20,
**characterized** in that the front face of the first part (21) facing away from the booster housing (10) serves as an abutment surface for a seal (5) which seals off the travel sensor (13) in respect of the sensor accommodating assembly (20).

22. A vacuum brake power booster as claimed in claim 16,
**characterized** in that the means for rotating the first part (21) is configurated in the shape of axial entrainment grooves (25).

23. A vacuum brake power booster as claimed in anyone of the claims 10 to 22,
**characterized** in that the sensor accommodating assembly (7, 17, 20) consists of plastics.

## Revendications

1. Procédé d'ajustement d'une dimension fonctionnelle d'un groupe structurel, pour système de freinage antiblocage pour véhicule automobile, qui est constitué d'un amplificateur d'effort de freinage à dépression (1) et d'un capteur électrique de course (13) servant à surveiller la position d'une paroi mobile (11) qui exerce la force d'amplification de l'amplificateur d'effort de freinage à dépression, notamment en vue de l'ajustement de la distance axiale entre un organe d'actionnement du capteur de course et la paroi mobile, caractérisé par les opérations suivantes de procédé consistant :
a) à introduire, dans le boîtier (10) de l'amplificateur d'effort de freinage à dépression (1), une butée (3) ayant une longueur déterminée (Y) et prévue pour un organe de fourniture de force (9) transmettant la force de sortie de l'amplificateur d'effort de freinage à dépression (1),
b) à faire le vide dans le boîtier (10) de l'amplificateur,
c) à actionner l'amplificateur d'effort de freinage à dépression (1) au moyen d'une force déterminée d'entrée qui correspond à une modification de la position de la paroi mobile (11),
d) à déterminer la distance (A) entre une surface de référence située sur le boîtier (10) de l'amplificateur et la paroi mobile (11),
e) à comparer la valeur (A) déterminée à l'opération d) avec une dimension de longueur fonctionnelle du capteur de course (13) qui est préfixée,
f) à choisir un élément-entretoise (15) ayant une longueur appropriée en fonction de la comparaison obtenue en résultat à l'opération e),
g) à placer l'élément-entretoise (15) sur l'organe d'actionnement (14) du capteur de course (13).

2. Procédé d'ajustement d'une dimension fonctionnelle d'un groupe structurel, pour système de freinage antiblocage pour véhicule automobile, qui est constitué d'un amplificateur d'effort de freinage à dépression (1) et d'un capteur électrique de course (13) servant à surveiller la position d'une paroi mobile (11) qui exerce la force d'amplification de l'amplificateur d'effort de freinage à dépression, notamment en vue de l'ajustement de la distance axiale entre un organe d'actionnement du capteur de course et la paroi mobile, caractérisé par les opérations suivantes de procédé consistant :
h) à introduire, dans le boîtier (10) de l'amplificateur d'effort de freinage à dépression, une butée (3) ayant une longueur déterminée (Y) et prévue pour un organe de fourniture de force (9) transmettant la force de sortie de l'amplificateur d'effort de freinage à dépression,
i) à faire le vide dans le boîtier (10) de l'amplificateur,
j) à actionner l'amplificateur d'effort de freinage à dépression (1) au moyen d'une force déterminée d'entrée qui correspond à une modification de la position de la paroi mobile (11),
k) à déterminer la distance (A) entre une surface de référence située sur le boîtier (10) de l'amplificateur et la paroi mobile (11),
l) à positionner le capteur de course (13) vis-à-vis de la paroi mobile (11) d'une façon telle que la distance axiale soit obtenue.

3. Procédé suivant la revendication 1, caractérisé en ce que les élémentsentretoises sont réalisés sous la forme de capuchons-entretoises (15) de différentes longueurs qu'on emboîte sur l'extrémité de l'organe d'actionnement (14).

4. Procédé suivant la revendication 3, caractérisé en ce que les capuchonsentretoises (15) sont de différentes couleurs.

5. Procédé suivant la revendication 1, selon lequel le capteur de course est disposé dans un logement de capteur situé dans le boîtier d'amplificateur, caractérisé en ce que la surface de référence est constituée par la surface frontale (12) du logement de capteur (7) qui est située à l'opposé du boîtier d'amplificateur (10).

6. Procédé suivant la revendication 5, caractérisé en ce qu'on détermine la distance (A) entre la surface frontale (12) du logement de capteur (7) et la paroi mobile (11) au moyen d'un appareil de mesure (4) introduit dans le boîtier d'amplificateur (10) avec une réalisation simultanée d'étanchéité.

7. Procédé suivant la revendication 1, caractérisé en ce que la dimension de longueur fonctionnelle du capteur de course (13) est égale à la distance qui existe entre l'extrémité de l'organe d'actionnement (14) et la surface de référence lorsqu'est atteinte une position de commutation du capteur de course (13).

8. Procédé suivant la revendication 2, caractérisé en ce que le capteur de course (13) est positionné au moyen d'un logement de capteur (17, 20) et en ce qu'une dimension fonctionnelle du logement de capteur (17, 20), qui détermine la position du capteur de course (13) à l'état monté, est fixée en fonction de la valeur de la distance (A) déterminée à l'opération k).

9. Procédé suivant la revendication 8, caractérisé en ce que la surface de référence est constituée par la surface de boîtier d'amplificateur (10).

10. Amplificateur (1) d'effort de freinage à dépression comportant un capteur électrique de course (13) pour surveiller la position d'une paroi mobile (11) qui exerce la force d'amplification de l'amplificateur d'effort de freinage à dépression, qui est fixé dans une ouverture (8) ménagé dans le boîtier (10) de l'amplificateur, caractérisé en ce que le capteur de course (13) est disposé dans un logement (17,20) de capteur qui, à l'état monté, d'une part, est en appui contre le boîtier (10) de l'amplificateur avec interposition d'une bague élastique d'étanchéité (27), et d'autre part, est pourvu de saillies d'enclenchement (18) qui viennent en prise derrière le bord de l'ouverture (8).

11. Amplificateur d'effort de freinage à dépression suivant la revendication 10, caractérisé en ce que le logement de capteur (17) comporte une gorge circonférentielle radiale (19) qui reçoit un anneau de maintien (16) retenant le capteur de course (13).

12. Amplificateur d'effort de freinage à dépression suivant l'une des revendications 10 et 11, caractérisé en ce que le logement de capteur (17) comporte une sécurité vis-à-vis de la rotation, par exemple une saillie radiale qui coopère avec un évidement ménagé dans le boîtier d'amplificateur (10).

13. Amplificateur d'effort de freinage à dépression suivant l'une des revendications 10 et 11, caractérisé en ce que le logement de capteur (17) est fixé dans le boîtier d'amplificateur (10) au moyen d'une liaison à baïonnette.

14. Amplificateur d'effort de freinage à dépression suivant la revendication 10, caractérisé en ce que le logement de capteur (17) est réalisé avec une longueur variable.

15. Amplificateur d'effort de freinage à dépression (1) comportant un capteur électrique de course (13) pour surveiller la position d'une paroi mobile (11) qui exerce la force d'amplification de l'amplificateur d'effort de freinage à dépression, caractérisé en ce que le capteur de course (13) est disposé dans un logement de capteur (17,20) prévu dans le boîtier d'amplificateur (10), qui est réalisé en deux parties et dont les deux parties (21,22) sont vissées entre elles.

16. Amplificateur d'effort de freinage à dépression suivant la revendication 15, caractérisé en ce que la première partie (21), pourvue d'un filetage extérieur, est agencée de façon à pouvoir être montée par le côté intérieur du boîtier d'amplificateur (10) et est immobilisée au moyen d'un circlip (23), tandis que la seconde partie (22), pourvue d'un filetage intérieur, comporte des moyens d'immobilisation en rotation, par exemple un talon axial (24) qui coopère avec un évidement ménagé dans le boîtier d'amplificateur (10), la première partie (21) étant pourvue de moyens (25) qui permettent de faire tourner cette première partie vis-a-vis de la seconde partie (22).

17. Amplificateur d'effort de freinage à dépression suivant la revendication 15, caractérisé en ce que, sur sa face frontale tournée vers le boîtier d'amplificateur (10), la seconde partie (22) comporte une gorge annulaire (26) qui sert à loger un joint torique élastique (27) qui assure l'étanchéité de la seconde partie (22) vis-à-vis du boîtier d'amplificateur (10).

18. Amplificateur d'effort de freinage à dépression suivant la revendication 15, caractérisé en ce que la gorge annulaire (26) comporte des flans inclinés.

19. Amplificateur d'effort de freinage à dépression suivant l'une des revendications 14 et 18, caractérisé en ce que la seconde partie (22) comporte une gorge circonférentielle radiale (19) qui sert à loger un anneau de maintien (16) qui retient le capteur de course (13).

20. Amplificateur d'effort de freinage à dépression suivant l'une des revendications 11 et 19, caractérisé en ce que la dimension fonctionnelle qui détermine la position du capteur de course (13) à l'état monté est constituée par la distance (L) entre la surface de référence et le-flanc de la gorge circonférentielle (19) qui est le plus près du boîtier d'amplificateur (10).

21. Amplificateur d'effort de freinage à dépression suivant l'une des revendications 15 à 20, caractérisé en ce que la surface frontale de la première partie (21) qui est située à l'opposé du boîtier d'amplificateur (10) sert de surface d'appui pour une garniture d'étanchéité (5) assurant l'étanchéité du capteur de course (13) vis-à-vis du logement de capteur (20).

22. Amplificateur d'effort de freinage à dépression suivant la revendication 16, caractérisé en ce que les moyens permettant de faire tourner la première partie (21) sont réalisés sous la forme de rainures axiales d'entraînement (25).

23. Amplificateur d'effort de freinage à dépression suivant l'une des revendications 10 à 22, caractérisé en ce que le logement de capteur (7,17,20) est en matière plastique.
